# EUROPÄISCHE PATENTANMELDUNG

(11) **EP 0 625 458 A1**
(43) Veröffentlichungstag der Anmeldung: **23.11.1994**
(21) Anmeldenummer: 94810240.5
(22) Anmeldetag: 28.04.1994
(51) Int. Cl.: B61D 17/04, B62D 27/06

(54) **Fahrzeugaufbauten**

(30) Priorität: 19.05.1993 CH 1528/93
(71) Anmelder: ALUSUISSE-LONZA SERVICES AG, CH-8034 Zürich (CH)
(72) Erfinder: Kampmann, Lutz, CH-8213 Neunkirch (CH)

(57) **Zusammenfassung**

Fahrzeugaufbauten für Schienen- und Strassenfahrzeuge, enthaltend Rahmenteile und über oder zwischen Rahmenteilen äussere Verkleidungsteile, wobei die äusseren Verkleidungsteile unter sich und/oder an den Rahmenteilen mit lösbaren Befestigungsmitteln verbunden sind und die lösbaren Befestigungsmittel Klettbänder darstellen.

## Beschreibung

Vorliegende Erfindung betrifft Fahrzeugaufbauten für Schienen- und Strassenfahrzeuge, enthaltend Rahmenteile und über oder zwischen den Rahmenteilen äussere Verkleidungsteile.

Fahrzeugaufbauten auf Böden, Bodengruppen oder Bodenteile von Schienen- oder Strassenfahrzeugen können beispielsweise in Form von Gerippestrukturen aufgebaut werden. Dabei können einzelne oder alle Teilflächen, wie die Seitenwände, das Dach und die Stirnwände als Gerippestruktur gestaltet werden. Die Seiten- und gegebenenfalls auch die Stirnwände, können beispielsweise Profile, wie Boden- und Dachgurten aufweisen und zwischen den Boden- und Dachgurten können weitere Profile, wie Längsgurten und vertikale Säulen oder Konsolen angeordnet sein. Das Dach kann beispielsweise eine Spriegelkonstruktion aus Profilen darstellen. Es ist auch möglich, mit Profilen und sogenannten Knoten, welche die Profile untereinander verbinden, Rahmenkonstruktionen zu fertigen. Solche Gerippestrukturen oder Rahmenkonstruktionen werden in der Regel mit Verkleidungsteilen, wie Blechen oder Platten, die über den Profilen angeordnet und festgelegt werden, verkleidet oder Bleche oder Platten werden in die freien Flächen zwischen den Profilen eingefügt und festgelegt.

Die Verkleidungsteile können beispielsweise an die Profile geschraubt, geklemmt, genietet oder geklebt werden, wobei Klebungen oft durch weitere Befestigungsmittel, wie Schrauben, Nieten oder Klemmleisten gesichert werden. Schraubverbindungen bedürfen passgenauer Bohrungen sowohl an Profilen, wie auch an Verkleidungsteilen, die Schraubköpfe müssen durch ansenken oder anderweitig mit der Aussenfläche bündig gemacht werden. Klebe- und Nietverbindungen sind einem raschen Austausch von Verkleidungsteilen hinderlich. Klemmverbindungen schliesslich bedürfen einer Vielzahl von Einzelteilen, die passgenau gefügt und festgelegt werden müssen.

Aufgabe vorliegender Erfindung ist es Fahrzeugaufbauten vorzuschlagen, deren Rahmenteile und äusseren Verkleidungsteile auf einfache Weise angebracht und auch leicht wieder gelöst und ersetzt werden können.

Erfindungsgemäss wird dies dadurch erreicht, dass äussere Verkleidungsteile unter sich, Rahmenteile unter sich und Verkleidungsteile und Rahmenteile gegenseitig mit lösbaren Befestigungsmitteln verbunden sind und die lösbaren Befestigungsmittel Klettbänder darstellen.

Die Fahrzeugaufbauten, wie z.B. die Gerippestruktur oder die Rahmenkonstruktion aus Rahmenteilen, kann selbsttragend sein oder kann nicht selbsttragend sein und erst durch das Anbringen der Verkleidungsteile selbsttragend werden und die volle Stabilität gewinnen.

Die Rahmenteile können unter sich mit an sich bekannten Befestigungselementen verbunden sein oder können teilweise mit Klettbändern und teilweise mit bekannten Befestigungselementen verbunden sein oder können alle mit Klettbändern verbunden sein. Die Verkleidungsteile unter sich und die Verkleidungsteile und Rahmenteile gegenseitig können alle oder nur teilweise mit Klettbändern verbunden sein.

Rahmen- und ferner Verkleidungsteile können Profile sein. Bei den Profilen kann es sich um Metall- oder Kunststoffprofile oder um Profile aus Metall und Kunststoff handeln. Bevorzugte Metalle für die Profile sind z.B. Eisen, Stahl, verzinktes Eisen, Magnesium, Aluminium oder Aluminiumlegierungen. Bevorzugte Kunststoffe für die Profile sind z.B. Thermoplaste, wie Polyamide, Polycarbonate, Polyester, ABS-Terpolymere usw. oder Duroplaste wie z.B. Epoxiharze, usw. Die Kunststoffe können auch verstärkt sein. Die Verstärkungen können Fasern, Gewebe oder Gewirke aus Glas, Kohlenstoff, Polyamiden usw. sein.

Besonders bevorzugt sind stranggepresste Profile aus Aluminium oder Aluminiumlegierungen.

Die Rahmen- und insbesondere Verkleidungsteile können auch Bleche, Platten oder Formteile aus Metall oder Kunststoffen sein oder es können Verbundplatten aus Metall und Kunststoff sein. Bevorzugte Metalle für die Verkleidungsteile sind z.B. Eisen, Stahl, verzinktes Eisen, Aluminium oder Aluminiumlegierungen. Bevorzugte Kunststoffe sind z.B. Thermoplaste, wie Polyamide, Polyester, Polyvinylchloride, ABS-Terpolymere usw. oder Duroplaste, wie z.B. Epoxiharze, Melamin-Phenol-Formaldehyd- oder Melamin-Formaldehydharze usw. Als Verkleidungsteile können gegbenenfalls auch durchsichtige oder durchsscheinende Teile, z.B. Fenster aus Glas, Mehrschichtenverbundglas oder Acrylglas usw. vorgesehen werden.

Bevorzugt sind auch Verbundplatten mit metallischen Deckschichten und/oder Deckschichten aus Kunststoffen und einem Kunststoffkern oder mit Kunststoffdeckschichten und einem Metallkern. Ein Kunststoffkern kann kompakte oder geschäumte Materialien enthalten.

Besonders bevorzugt sind Verkleidungsteile in Form von Blechen oder Platten aus Aluminium oder Aluminiumlegierungen.

Als lösbare Befestigungsmittel werden Klettbänder angewendet. Klettbänder weisen zwei Bänder auf, die aufeinandergelegt stark haften, ohne Strukturzerstörung jedoch bei einem genügend hohen Kraftaufwand voneinander getrennt werden können. Ein Band, beispielsweise eine gewobene Unterlage enthält eingewoben oder anderweitig befestigt eine Vielzahl von Schlingen, beispielsweise aus Kunststoffasern, während das andere Band ebenfalls eine gewobene Unterlage aufweisen kann und eingewoben oder anderweitig befestigt sind eine Vielzahl von hakenartigen Kunststoffasern. Werden die beiden Bänder zusammengedrückt, greifen die Haken in die Schlingen und durch die Vielzahl von Haken und Schlingen über die Bandfläche ergibt sich eine flächenförmige Haftung der Bänder aneinander. Die Bänder weisen auf ihrer Unterseite eine relativ glatte Fläche auf. Die glatten Flächen werden bevorzugt mittels Klebemassen auf den zu verbindenden Gegenständen, d.h. den Profilen, Blechen, Platten oder Formteilen aufgebracht. Geeignete Klettbänder sind beispielsweise unter dem Markennamen VELCRO-Band in der Fachwelt bekannt.

Vorteilhaft sind Klebemassen beispielsweise auf Basis von physikalisch abbindenden Klebstoffen, wie Schmelzklebstoffen, z.B. Styrolbutadien-, Polyamid-, Ethylenvinylacetat- und Polyesterklebstoffe; Plastisolklebstoffe, z.B. PVC mit Weichmachern und Haftvermittlern; Haftklebstoffe, z.B. Kautschuke oder Polyacrylate; Kontaktklebstoffe, z.B. Polyurethan-Styrolbutadien- oder Polychloroplenklebstoffe; Lösungsmittel/Dispersionsklebstoffe; z.B. Polyurethan-, Vinylacetat-, Vinylchlorid-, Vinylidenchloridcopolymere oder chemisch abbindende Klebstoffe, wie beispielsweise Reaktionsklebstoffe des Types Epoxid plus Säureanhydride, Epoxid plus Polyamine, Polyisocyonate plus Polyole, Cyanoacrylate, Metacrylate, UP mit Styrol oder Metacrylaten, PF plus PVFM oder NBR, PJ oder Polybenzimidazole.

Die Klebemasse kann als solche z.B. in flüssiger bis pastöser Form oder als Schaum durch streichen, rakeln, sprühen etc. aufgetragen werden oder die Klebemasse kann Bestandteil eines beidseitig klebenden Klebebandes oder Doppelklebbandes sein.

Die Klettbänder können auch mittels mechanischer Mittel an den Profilen, Blechen, Platten oder Formteilen befestigt werden. Solche mechanischen Mittel sind z.B. Klammern, Schrauben, Stifte und dergleichen oder die Bänder können in Nuten eingelegt oder auf Bleche aufgesetzt und durch einrollen der Nuten- oder Blechränder fixiert werden.

Die Klettbänder werden vorteilhaft an den Randpartien der Bleche und Platten angebracht. Es ist unkritisch ob das Band mit den Haken oder das Band mit den Oesen oder Schlaufen an den Blechen oder Platten angebracht wird. Das andere Band mit den Schlaufen resp. den Haken wird dann an entsprechender Stelle an einer zweiten Platte oder Blech oder an einem Profil oder Profilteil befestigt.

Die Profile können beispielsweise Flachprofile, Winkelprofile, C-Profile, Hohlprofile mit einer, zwei oder mehr Kammern oder Hohlprofile mit angeformten C-Profilen sein. Das Klettband, resp. das eine Band des Klettbandes kann auf einer als Auflagefläche vorgesehenen Profilfläche festgelegt werden oder die Profilfläche kann zur Aufnahme des Bandes eine Nut mit einer Tiefe, die bis etwa der Dicke des Klettbandes entspricht, versehen sein. Das Band kann in diese Nut eingelegt werden und das Profil und z.B. das äussere Verkleidungsteil können derart in einen geringen gegenseitigen Abstand gebracht werden. Dieser Abstand ist somit geringer als die Dicke der beiden Bänder, die das Klettband bilden.

Die Profile können auch beispielsweise gegenüber der Profilwand zurückversetzte Fahnen oder Kammern aufweisen. Auf diesen Fahnen oder auf den vorgesehenen Oberflächen der Kammern kann das eine Band festgelegt werden. Entspricht das Mass des Zurückversetzens der Fahne oder der Kammer der Summe der Dicke des Klettbandes und z.B. der Platte oder des Bleches, können glattflächige, bündige Aussenflächen erzielt werden. Sinngemäss kann beim Verbinden von zwei oder mehreren Platten oder Blechen an wenigstens einer Platte oder Blech randständig, in der Breite des Klettbandes, eine Stufe eingeformt werden. Entspricht die Stufenhöhe der Summe der Dicke des Klettbandes und des nächsten Bleches oder Platte, kann ebenfalls eine glattflächige bündige Aussenfläche erreicht werden.

Die Klettbänder, d.h. entweder das Band mit den Haken oder den Schlaufen, können nicht nur an den Randbereichen von Platten oder Blechen angewendet werden, sondern auch beliebig auf der Fläche verteilt. Sinnvollerweise jedoch nur im Bereich solcher Stellen, an deren Gegenseite sich z.B. ein Profilteil, ausgerüstet mit dem entsprechenden anderen Band, befindet. Um Ungenauigkeiten auszugleichen, kann das auf dem Blech oder der Platte angeordnete Band grossflächiger gewählt werden als der Bandteil der Gegenseite.

Die Profile und insbesondere die Verkleidungsteile, wie Bleche und Platten, können z.B. an den Rändern oder Stossfugen Kunststoff- oder Gummiprofile tragen, welche Masstoleranzen überbrücken oder dichtend wirken.

In der Regel werden Fahrzeugaufbauten, beispielsweise für Karosserien für Busse oder Kofferaufbauten, durch ein Gerippe aus Profilen, wie aus Boden- und Dachgurten und gegebenenfalls dazwischen angeordneten Längsgurten und vertikaler Säulen und/oder Konsolen aufgebaut. Die Profile können gegenseitig verschraubt, verklebt, verschweisst, vernietet oder erfindungsgemäss mit Klettband befestigt werden. Bevorzugt ist z.B. eine Verbindung der Profile über Eckstücke. Solche Verbindungen sind u.a. in der CH-Patentschrift 627 982 beschrieben.

Die erfindungsgemässen lösbaren Befestigungsmittel können in ihrer Wirkung durch weitere mechanische Befestigungsmittel, wie beispielsweise Nieten oder Schrauben ergänzt werden. Solche ergänzenden Befestigungsarten bieten sich z.B. für hochbeanspruchte Teile oder Bereiche von Teilen an. Die ergänzenden Befestigungsmittel können an gleicher Stelle wie das Klettband und auch durch dieses durchstossend angebracht werden.

Besonders bevorzugt sind Fahrzeugaufbauten, wie Lastkraftwagen mit Kofferaufbauten, Fahrzeuge von Rettungsdiensten, wie Feuerwehr und Ambulanzen, Reisebusse, Omnibusse, doppelstöckige Omnibusse, Strassenbahnwagen, Eisenbahnwagen, Seilbahnkabinen usw., die eine Gerippestruktur z.B. aus Profilen und über oder zwischen der Gerippestruktur eine Beplankung mit flächenförmigen Gebilden, wie z.B. Blechen oder Platten aufweisen. Es kann auch zweckmässig sein, anstelle eines Bleches oder einer Platte ein Formteil vorzusehen. Formteile können z.B. getiefte, gezogene oder gegossene Teile sein, denen neben oder anstatt der Verkleidungsfunktion eine erweiterte Funktion, z.B. eine Trittstufe, ein Einschubfach oder dergl. zukommt oder es können Teile sein, an denen weitere Befestigungsmittel, z.B. für Schautafeln u.ä., angebracht sind.

Die Fahrzeugaufbauten können auf einfache Weise gefertigt werden, indem zuerst die Gerippestruktur gefügt wird. An den Aussenseiten der Profile, wie Trägern oder Gurten kann die eine Bandseite des Klettbandes bereits vor dem Fügen trennfest angebracht sein. Nach dem Fügen der Gerippestruktur präsentiert deren Aussenseite Auflageflächen an den Profilen oder Profilrändern, wobei die Auflageflächen wenigstens teilweise mit der einen Bandseite des Klettbandes bedeckt sind.

Die Gerippestruktur kann auch zuerst gefügt werden und anschliessend werden an der Aussenseite der Gerippestruktur an den vorgesehenen Stellen die eine Bandseite des Klettbandes trennfest angebracht.

Die Auflageflächen an den Profilen muss nicht vollständig mit Klettband bedeckt sein, vielmehr richtet sich die Fläche des Klettbandes und somit die Stärke der Haftung nach den mechanischen Beanspruchungen.

Entsprechend können auf den vorgesehenen Flächen der Profile, Bleche, Platten und Formteile die andere Bandseite trennfest angebracht werden.

Auf die sich anbietenden Auflageflächen können dann auf leichte Art und Weise beispielsweise Bleche, Platten oder Formteile gegen Profile, jedoch auch Blech oder Platte gegen Blech oder Platte oder Profil gegen Profil durch anlegen und festdrücken befestigt werden. Die Verbindungen mit Klettbändern sind lösbar und wieder festlegbar. Zur Erleichterung des Lösens von Teilen voneinander können Ansatzpunkte für hebelartige Werkzeuge, Griffmulden und dergleichen an den Profilen, Platten oder Blechen vorgesehen werden.

Somit ist es beispielsweise leicht möglich, ein äusseres Verkleidungsteil im Falle einer Beschädigung oder aus anderen Gründen auszutauschen.

Beispielsweise im Bereich Transport Schiene, Transport Strasse und beim Automobilbau kommt es auf eine hohe Servicefreundlichkeit der Strukturen an.

Ein entscheidender Faktor für den Einsatz von Aluminiumblechen im Automobilbau sind Reparatur- und Instandhaltungskonzepte, bei denen ein möglichst geringer Aufwand anfällt. Somit müssen lösbare Verbindungen zum Einsatz gebracht werden, die es erlauben, mit einfachsten Mitteln gelöst zu werden. Gleichzeitig müssen sie aber auch über ausreichende mechanische Festigkeiten für das jeweilige Einsatzgebiet verfügen. Zur ausreichenden Festigkeit muss als weiterer wichtiger Punkt das Energieaufnahmevermögen im Falle eines Aufpralls betracht werden.

Erfindungsgemäss werden diese Probleme durch lösbare Befestigungsmittel, nämlich durch Klettbänder, die nahezu beliebig lösbar sind, gelöst. Die Klettbänder besitzen ähnliche Scherfestigkeiten wie z.B. Kleber. Sie sind jedoch im Vergleich zu Klebesystemen schneller und einfacher zu applizieren. Klettbänder bilden eine flächenförmige Verbindung zwischen den Teilen, dadurch werden im Falle eines Aufpralls die entstehenden Kräfte auf die gesamte Haftfläche verteilt und somit werden gute Aufpralleigenschaften erreicht. In Kombination mit Schrauben oder Nieten sind die Klettbänder auch in hochbelasteten Bereichen einer Struktur einsetzbar.

## Patentansprüche

1. Fahrzeugaufbauten für Schienen- und Strassenfahrzeuge, enthaltend Rahmenteile und über oder zwischen Rahmenteilen äussere Verkleidungsteile
dadurch gekennzeichnet, dass
äussere Verkleidungsteile unter sich, Rahmenteile unter sich und Verkleidungsteile und Rahmenteile gegenseitig mit lösbaren Befestigungsmitteln verbunden sind und die lösbaren Befestigungsmittel Klettbänder darstellen.

2. Fahrzeugaufbauten gemäss Anspruch 1, dadurch gekennzeichnet, dass die Rahmenteile eine selbsttragende Struktur und die äusseren Verkleidungsteile eine Beplankung darstellen.

3. Fahrzeugaufbauten gemäss Anspruch 1, dadurch gekennzeichnet, dass die Rahmenteile zusammen mit den äusseren Verkleidungsteilen eine selbsttragende Struktur darstellen.

4. Fahrzeugaufbauten gemäss Anspruch 1, dadurch gekennzeichnet, dass Klettband aus zwei Bändern besteht, wobei ein Band eine Vielzahl von Haken und das andere Band eine Vielzahl von Schlaufen aufweist und jedes Band durch Kleben, Klammern oder Schrauben gegengleich an je einem Profil, Blech, Platte oder Formkörper festgelegt ist oder durch Einrollen von Nutenrändern an Profilen oder Blechrändern an Blechen oder Platten festgelegt ist.

5. Fahrzeugaufbauten gemäss Anspruch 1, dadurch gekennzeichnet, dass die Rahmenteile stranggepresste Profile aus Aluminium oder Aluminiumlegierungen sind und/oder dass die Bleche oder Platten aus Aluminium oder Aluminiumlegierungen bestehen oder Aluminium oder Aluminiumlegierungen enthalten.
